# EUROPÄISCHE PATENTSCHRIFT

(11) **EP 3 727 750 B1**
(45) Veröffentlichungstag und Bekanntmachung des Hinweises auf die Patenterteilung: **25.06.2025**
(21) Anmeldenummer: 18826336.2
(22) Anmeldetag: 19.12.2018
(51) Int. Cl.: B24D 9/08, B24B 27/00, B23Q 3/157

(54) **VORRICHTUNG ZUM AUSWECHSELN EINER POLIERSCHEIBE**
DEVICE FOR EXCHANGING A POLISHING DISC
DISPOSITIF POUR LE REMPLACEMENT D'UN DISQUE DE POLISSAGE

(30) Priorität: 20.12.2017 DE 102017130805
(43) Veröffentlichungstag der Anmeldung: 28.10.2020
(73) Patentinhaber: Rud. Starcke GmbH & Co. KG, 49324 Melle (DE)
(72) Erfinder: UNNERSTALL, Werner, 49326 Melle (DE); WALL, Christian, 32120 Hiddenhausen (DE); BURSTEIN, Christian, 33824 Werther (DE); KAMPMEYER, Stephan, 49326 Melle (DE)
(74) Vertreter: Dantz, Jan Henning
(86) Internationale Anmeldenummer: PCT/EP2018/085932
(87) Internationale Veröffentlichungsnummer: WO 2019/121975

(56) Entgegenhaltungen:
- WO-A1-2015/125068
- WO-A1-2017/210755
- CN-A- 107 283 288
- DE-A1- 102012 006 502
- DE-U1- 202013 101 858
- US-A- 5 277 688
- US-A- 5 443 358
- US-A1- 2007 232 211

## Beschreibung

Die Erfindung betrifft eine Vorrichtung zum Auswechseln einer Polierscheibe nach dem Oberbegriff des Anspruchs 1.

Die Erfindung betrifft weiter eine Vorrichtung zum Auswechseln einer Polierscheibe nach dem Oberbegriff des Anspruchs 15.

Mittels Polierscheiben werden Oberflächen von Werkstücken sozusagen endbearbeitet. Dabei bestehen die Polierscheiben aus einem sehr weichen Material, beispielsweise aus einem Schaumstoff, Schaumgummi, Filz oder Lammfell. Die Befestigung auf dem Stützteller des Polierwerkzeugs, erfolgt durch Verbindungselemente, insbesondere durch eine Klett-Verbindung.

Die gegenüberliegende Arbeitsseite der Polierscheibe wird üblicherweise mit einer hochviskosen Polierpaste versehen, wobei beachtet werden muss, dass beim Anbringen der Polierscheibe an dem Stützteller die Polierscheibe mit der richtigen Seite am Stützteller befestigt wird.

Zur einfacheren Handhabung beim Auswechseln der Polierscheibe, also um diese leichter abziehen zu können, ragt die Polierscheibe randseitig über den Stützteller hinaus.

Für ein optimales Polierergebnis ist die auf die Arbeitsseite der Polierscheibe aufgetragene Menge an Poliermittel entscheidend, wobei bei einer neuen Polierscheibe zunächst eine größere Menge Poliermittel aufgetragen und in die Polierscheibe eingearbeitet wird. Bei folgenden Polierarbeiten wird dann lediglich noch eine kleine Menge an Poliermittel für den jeweiligen Polierprozess aufgetragen, wobei vorzugsweise flächige Werkstücke durch Orbital-, Rotativ- und Vibrationsbewegungen des Polierwerkzeugs poliert werden.

Um Politurspritzer zu vermeiden, ist eine exakte Positionierung der Polierscheibe bzw. der Polierpaste sowie deren Ausprägungsbild auf der Polierscheibe wichtig. Im Übrigen sind für das Polierergebnis der Anpressdruck und die Polierzeit maßgeblich.

Ein Wechsel der Polierscheibe wird dann erforderlich, wenn diese beispielsweise mit Klarlack oder Basislack, mit dem das Werkstück beschichtet ist, zugesetzt ist, oder wenn die Standzeit der Polierscheibe abgelaufen oder das Poliermittel durch längere Pausen eingetrocknet ist.

Ein Auswechseln der Polierscheibe ist bislang sehr zeitaufwändig und erfordert durch die betriebsbedingte Verschmutzung eine äußerst sorgfältige Arbeitsweise. Damit steht das bisherige Auswechseln der Polierscheibe einer stets geforderten Kostenoptimierung für den gesamten Poliervorgang deutlich entgegen.

Aus den Druckschriften WO 2017/210755 A1, CN 107 283 288 A, DE 10 2012 006 502 A1, WO 2015/125068 A1 und DE 20 2013 101 858 U1 sind Vorrichtungen zum Auswechseln von Schleifscheiben bekannt. Solche Schleifscheiben unterscheiden sich insbesondere in ihrer Härte und geringeren Dicke deutlich von den hier behandelten Polierscheiben aus weichem Material.

Der Erfindung liegt die Aufgabe zugrunde, eine Vorrichtung der gattungsgemäßen Art so weiterzuentwickeln, dass das Auswechseln einer Polierscheibe in kürzerer Zeit und automatisch möglich ist.

Diese Aufgabe wird durch eine Vorrichtung mit den Merkmalen der Ansprüche 1 und 15 gelöst.

Weitere vorteilhafte Ausbildungen der Erfindung sind in den Unteransprüchen gekennzeichnet.

Mittels dieser Vorrichtung wird die sozusagen abgenutzte und am Stützteller des Schleifwerkzeugs gehaltene Polierscheibe automatisch gewechselt, d.h., gegen eine neue Polierscheibe getauscht.

Dazu ist lediglich das Polierwerkzeug, üblicherweise der Arm des besagten Roboters, mit dem angeschlossenen Stützteller in den Bereich einer Entnahmeöffnung eines Spenders zu verfahren bis zum Kontakt der zuoberst liegenden Polierscheibe, wobei durch entsprechenden Druck die formschlüssige Verbindung durch die miteinander korrespondierenden Klettschichten des Stütztellers einerseits und der Polierscheibe andererseits hergestellt wird.

Eine erfindungsgemäß an der der Entnahmeöffnung gegenüberliegenden Seite der Wechselvorrichtung angeordnete Schiebeeinrichtung, auf der der Stapel an Polierscheiben aufliegt, dient in diesem Fall als Widerlager.

Nach einer Entnahme der entsprechenden Polierscheibe wird der verbleibende Stapel durch die Schiebeeinrichtung derart verschoben, dass die oberste Polierscheibe in eine Entnahmeposition gelangt.

Die Entnahmeöffnung ist dabei nach einer ersten Ausführungsvariante in ihrem lichten Abmaß kleiner als das zugeordnete äußere Abmaß der Polierscheiben, so dass ein Anschlag gebildet ist, durch den der Verschiebeweg des Stapels mittels der Schiebeeinrichtung begrenzt ist.

Der Stützteller hingegen ist in seinem äußeren Abmaß kleiner als das lichte Abmaß der Entnahmeöffnung, so dass der Stützteller unbehindert zur Verbindung mit der Polierscheibe in den Spender eintauchen kann. Das Fassungsvermögen des Spenders ist derart bemessen, dass eine ausreichende Anzahl von Polierscheiben für eine Arbeitsschicht bevorratet ist. Die Schiebeeinrichtung ist im Übrigen pneumatisch, hydraulisch oder elektromechanisch antreibbar.

Der Wechselvorrichtung vorgeschaltet ist eine Abziehvorrichtung, mittels der die abgenutzte Polierscheibe vom Stützteller entfernt wird. Diese Abziehvorrichtung ist mit einer Klemmvorrichtung versehen, die aus Greifzangen, Fingerzangen oder Parallelgreifern bestehen kann und mittels der die randseitig über den Stützteller hinausragende Polierscheibe vom Stützteller abgezogen wird.

Die Klemmvorrichtung weist einen als Zahnscheibenhalterung dienenden Grundkörper mit kreisförmiger Öffnung auf, wobei der Grundkörper eine sich von der Zahnscheibe weg aufweitende Einlassöffnung aufweist, in die der Stützteller eines Polierwerkzeugs mit daran haftender Polierscheibe einführbar ist, und eine sich von der Zahnscheibe weg aufweitende Auslassöffnung, durch die eine vom Stützteller gelöste Polierscheibe aus der Klemmvorrichtung entnehmbar ist.

Dabei wird die Klemmvorrichtung nach einem Verfahren des Polierwerkzeugs in den Wirkbereich der Abziehvorrichtung koordinatenabhängig, vorzugsweise durch Laser-Detektion, durch einen mechanischen Kontakt oder eine Lichtschranke in eine Klemmstellung gebracht. Danach wird das Polierwerkzeug vorzugsweise vertikal in den Bereich der Wechselvorrichtung bewegt, wobei sich die Klettverbindung zwischen dem Polierscheibe und dem Stützteller löst.

Weiter kann ein Auffangbehälter vorgesehen sein, zur Aufnahme der vom Stützteller gelösten Polierscheibe. Der Auffangbehälter, der mit einem Müllbeutel ausgekleidet sein kann, ist so konzipiert, dass er aus dem Arbeitsbereich des Polierwerkzeugs in den Bereich der Wechselvorrichtung verschoben werden kann.

Nach einem weiteren Gedanken der Erfindung weist die Wechselvorrichtung mehrere in gleichem Abstand zueinander auf einem Tisch angeordnete Spender auf, wobei der als Rund- oder Lineartisch ausgebildete Tisch taktweise verfahrbar ist und der jeweilige Spender mit der Schiebeeinrichtung in Korrespondenz bringbar ist. Unterhalb des Tisches kann ein Raum zur Bevorratung von Spendern vorgesehen sein, die konfektioniert mit Polierscheiben bestückt vorliegen.

Insbesondere bei Polierwerkzeugen, die orbitale und/oder exzentrische Bewegungen vollführen, können diese bei Unterbrechung der Antriebsleistung unbestimmt in einer Position verharren. Sie müssen daher zum aufzunehmenden Polierscheibe ausgerichtet werden, wozu oberhalb der Wechselvorrichtung eine Ausrichtstation für den Stützteller angeordnet ist.

Diese Ausrichtstation weist eine prismaförmige Aufnahme auf, die in einer horizontalen Bewegung zum Stützteller hin verschoben wird und diesen durch eine orbitale oder exzentrische Bewegung in Mittenposition, exakt zur Achse der Wechselvorrichtung positioniert. Danach fährt die prismenförmige Aufnahme zurück in eine Parkposition.

Die Bewegungsabläufe des Polierwerkzeugs, sprich des Roboters, sind rechnergesteuert, wobei auch die Notwendigkeit eines Polierscheibenwechsels durch eine entsprechende Sensorik erkannt wird.

Zum automatischen Arbeitsablauf gehört auch das Belegen der Polierscheibe mit einem Poliermittel, insbesondere einer Polierpaste. Hierzu ist eine Dosiervorrichtung der Wechselvorrichtung nachgeordnet, die mit einer Düsenspitze versehen ist, die eine exakte Aufgabe auf die Arbeitsseite der Polierscheibe ermöglicht und tropfenfrei verschließt.

Alternativ kann das Poliermittel über eine Poliermitteldüse von der Rückseite her in die bevorzugt als Polierschwamm ausgebildete Polierscheibe oder durch die Polierscheibe hindurch dosiert werden.

Diese Dosiervorrichtung ist mit einem Vorratsbehältnis versehen, das über eine Versorgungsleitung mit der Düsenspitze verbunden ist.

Die Düsenspitze kann am Roboterarm, im Bereich des Stütztellers, angeordnet sein, wobei die Polierscheibe nach einer Drehbewegung zeit- und wegeoptimiert mit dem Poliermittel versehen wird.

Alternativ kann die Düsenspitze oberhalb der Wechselvorrichtung platziert sein, wobei sich dann das Polierwerkzeug hin zur Düsenspitze bewegt.

Die Ausgabemenge auf die Polierscheibe ist im Übrigen gleichfalls rechnergesteuert.

Ein erforderliches Befüllen der Spender mit Polierscheiben kann durch eine Bedienperson vorgenommen werden, wobei ein optisches, akustisches oder elektrisches Signal einen entsprechenden Hinweis an die Person gibt. Ebenso kann eine elektronische Nachricht von der Anlagensteuerung, d.h. dem Rechner mitgeteilt werden. Die Bedienperson kann im Übrigen mehrere Einrichtungen entsprechend versorgen.

Über den Rechner können logistische Aufgaben gelöst oder Bestellungen angestoßen werden, wobei der Verbrauch an Polierscheiben und Poliermitteln pro bearbeitetem Werkstück, Schicht oder Zeitspanne ermittelt und ausgewiesen werden, was letztendlich zu einer kontinuierlichen Verbesserung des Arbeitsprozesses beiträgt.

Dies betrifft gleichermaßen die Erkennung des Verbrauchs an Polierscheiben und Poliermitteln, über dessen Feststellung Instandhaltungsmaßnahmen, beispielsweise ein Wechsel des Stütztellers aufgrund von Verschleiß, wahrgenommen werden können.

Nach einem weiteren Gedanken ist der Arbeitsbereich des Polierwerkzeugs vom Rüstbereich, also des Bereiches, in dem die Wechselvorrichtung bestückt wird, getrennt. Dabei ist der Arbeitsbereich durch einen Schutzzaun, Lichtschranken, Lichtvorhänge, Gitter und/oder Türen gesichert, wobei bei einem Öffnen der Türen das Polierwerkzeug in seiner Bewegung gestoppt oder in eine Grundstellung verfahren und abgeschaltet wird.

Der Boden ist dabei bevorzugt fest mit einer Positionierungsstange verbunden, die bei Absenken des Polierwerkzeugs mit dem an diesem angeordneten Stützteller relativ zu den gestapelten Polierscheiben verfahrbar ist, bis der Stützteller zur Anlage mit der obersten der Polierscheiben kommt und in dieser Position verrastbar ist.

Nach einer nochmals alternativen Ausführungsvariante der Erfindung weist die Vorrichtung eine Wechselvorrichtung mit mindestens einem Spender auf, wobei der Spender einen geneigt positionierten Magazinschacht aufweist, mit einem oberen Befüllungsbereich zur Auflage wenigstens einer Polierscheibe, die entlang des Magazinschachtes in eine Entnahmestation an einem unteren Ende des Magazinschachtes bringbar ist, an die der Stützteller zur Anbringung der Polierscheibe an den Stützteller heranfahrbar ist.

Die Entnahmestation weist dabei in einer bevorzugten Weiterbildung Positionsstifte zur exakten Positionierung der Polierscheibe auf.

Ausführungsbeispiele der Erfindung werden nachfolgend anhand der beigefügten Zeichnungen beschrieben.

Es zeigen:
- Fig. 1 und 2: den Einsatz einer erfindungsgemäßen Einrichtung in jeweils unterschiedlichen schematischen Ansichten
- Fig. 3: eine Einzelheit der Einrichtung in einer perspektivischen Seitenansicht
- Fig. 4: einen vergrößerten Ausschnitt des Teils nach Fig. 3
- Fig. 5: eine weitere Einzelheit der Einrichtung in einer perspektivischen Ansicht
- Fig. 6: eine weitere Einzelheit der Einrichtung in einer perspektivischen Ansicht
- Fig. 7: einen vergrößerten Ausschnitt der Einzelheit nach Fig. 6,
- Fig. 8: eine Schnittansicht durch eine Ausführungsvariante einer als Backenwerkzeug ausgebildeten Klemmeinrichtung,
- Fig. 9: eine teilweise geschnittene Seitenansicht durch eine weitere Ausführungsvariante einer Klemmeinrichtung,
- Fig. 10: eine Seitenansicht einer Ausführungsvariante eines Spenders,
- Fig. 11: eine Schnittansicht durch den in Figur 10 gezeigten Spender,
- Fig. 12: eine perspektivische Ansicht einer weiteren Ausführungsvariante eines Spenders, und
- Fig. 13: eine perspektivische Detailansicht des in Figur 12 mit XIII bezeichneten Ausschnitts.

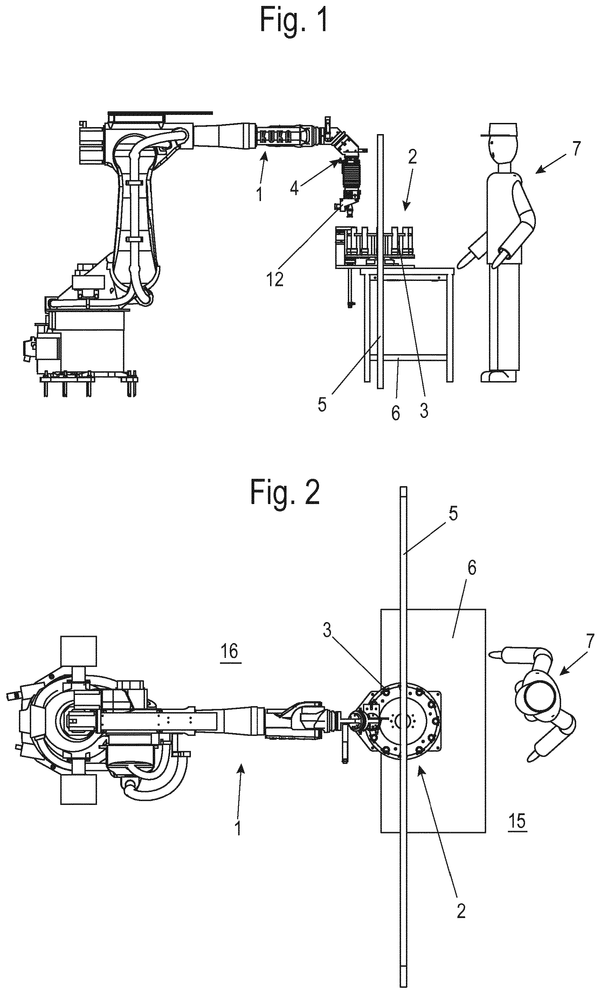

In den Fig. 1 und 2 ist eine Vorrichtung zum Auswechseln einer blattförmigen, üblicherweise 10 - 20mm dicken, in Funktion mit einem Poliermittel belegten Polierscheibe 8, die an einem Stützteller 4 eines an einem Roboter 1 gehaltenen Polierwerkzeugs mittels Verbindungsmitteln befestigt ist.

Gemäß der Erfindung weist die Vorrichtung eine auf einem Arbeitstisch 6 positionierte Wechselvorrichtung 2 auf, die im Beispiel mehrere, an einem Rundtisch gehaltene Spender 3 aufweist, die in gleichem Abstand zueinander taktweise in den Übergabebereich mit dem Stützteller 4 bringbar sind.

Durch eine Trennwand 5 ist ein Rüstbereich 15 von einem Arbeitsbereich 16 getrennt, wobei im Arbeitsbereich 16 der Roboter 1 mit einem Teil der Wechselvorrichtung 2 angeordnet ist, während der Rüstbereich 15 dazu gedacht ist, mittels einer Bedienperson 7 die Wechselvorrichtung 2 mit Spendern 3 zu bestücken.

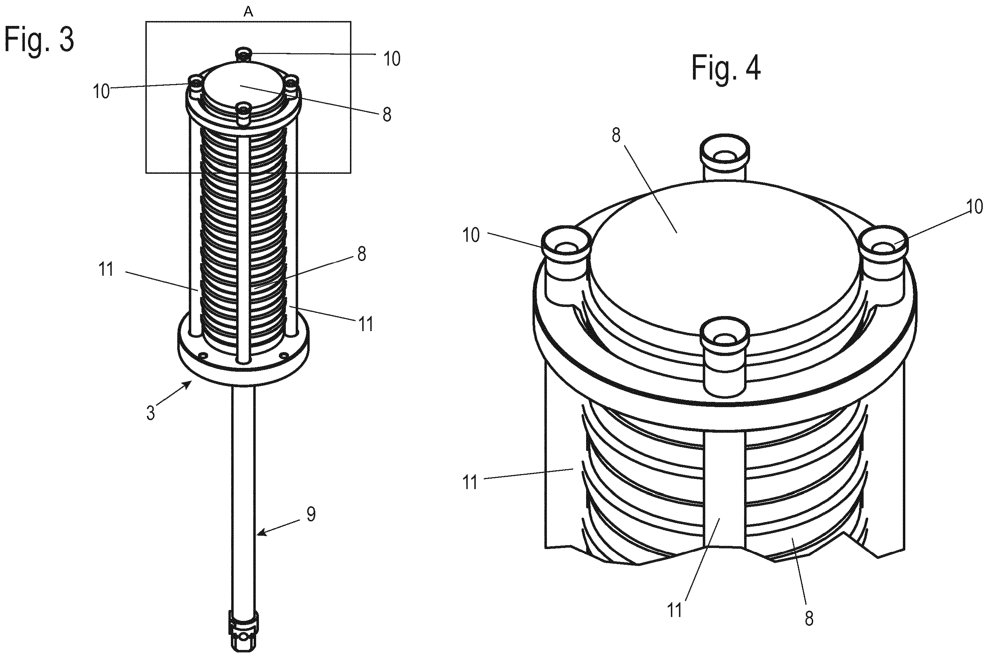

Ein Spender 3 ist in der Fig. 3 als Einzelheit abgebildet. Im Beispiel weist der Spender 3 mehrere, konkret vier Begrenzungsstangen 11 auf, die eine seitliche Fixierung für im gebildeten Innenraum gestapelte Polierscheiben 8 bilden.

Diese Polierscheiben 8 weisen in an sich bekannter Weise eine Verbindungs- und gegenüberliegend eine Arbeitsfläche auf, wobei die Verbindungsfläche insbesondere mit einer Klettschicht versehen ist, die mit einer Klettschicht des Stütztellers 4 in Verbindung bringbar ist.

Die Polierscheiben 8 sind in dem Spender 3 derart untergebracht, dass die Verbindungsfläche der obersten Polierscheibe 8 frei liegt, während sich die unterste Polierscheibe 8 mit ihrer Arbeitsfläche an einer Schiebeeinrichtung 9 abstützt, die axial verschiebbar ist und dabei den Stapel so weit weiterbewegt, dass nach einer Entnahme der obersten Polierscheibe 8 die folgende Polierscheibe 8 in eine Entnahmeposition gebracht wird.

Insbesondere in der Fig. 4 ist deutlich zu erkennen, dass im Bereich der Entnahme, d.h. im Bereich der oberen Polierscheibe 8, an die vorstehenden Enden der Stangen 11 Anschläge 10 angebracht sind, die gegenüberliegend in einem lichten Abstand zueinander angeordnet sind, der kleiner ist als das zugeordnete äußere Abmaß der Polierscheibe 8, die flexibel, d.h. biegsam ausgebildet ist.

Zur Verbindung der Polierscheibe 8 mit der zugewandten Seite des Stütztellers 4 wird dieser unter Druck gegen die Verbindungsfläche der Polierscheibe 8 gebracht, wobei das äußere Abmaß des Stütztellers 4 kleiner ist als der lichte Abstand der sich gegenüberliegenden Anschläge 10. Daraus ergibt sich ein randseitiger Überstand der Polierscheibe 8 gegenüber dem Stützteller 4.

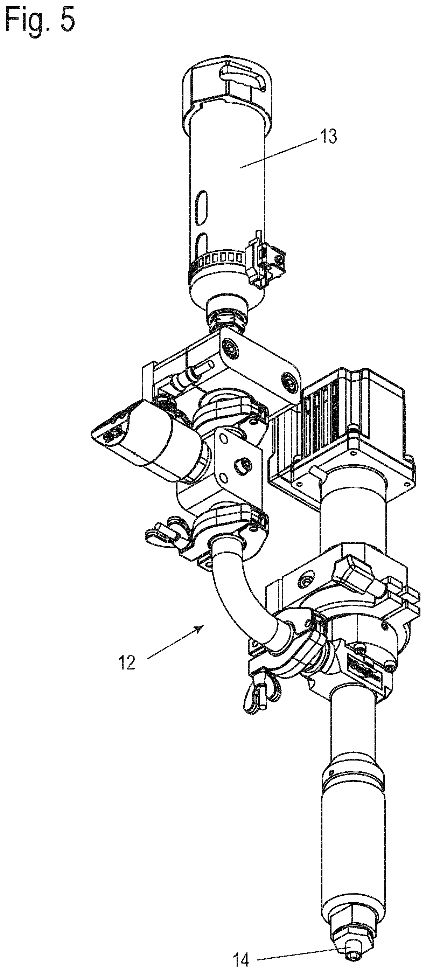

Um das pastöse Poliermittel auf die Arbeitsfläche der Polierscheibe 8 aufzutragen, ist der Wechselvorrichtung 2 nachgeordnet eine Dosiervorrichtung 12, die als Einzelheit in der Fig. 5 abgebildet ist.

Diese Dosiervorrichtung 12 weist eine mit dem Poliermittel befüllte Kartusche 13 auf sowie eine Düse 14, mit der das Poliermittel auf die Arbeitsfläche der Polierscheibe 8 aufbringbar ist und zwar in einer definierten Menge und in einem definierten Auftragsbild.

Die Dosiervorrichtung 12 kann stationär, im Bereich der Wechselvorrichtung 2 oder am Roboterarm des Roboters 1 positioniert sein, wobei der Stützteller 4 durch eine entsprechende Bewegung in den Auftragsbereich der Düse 14 gebracht wird.

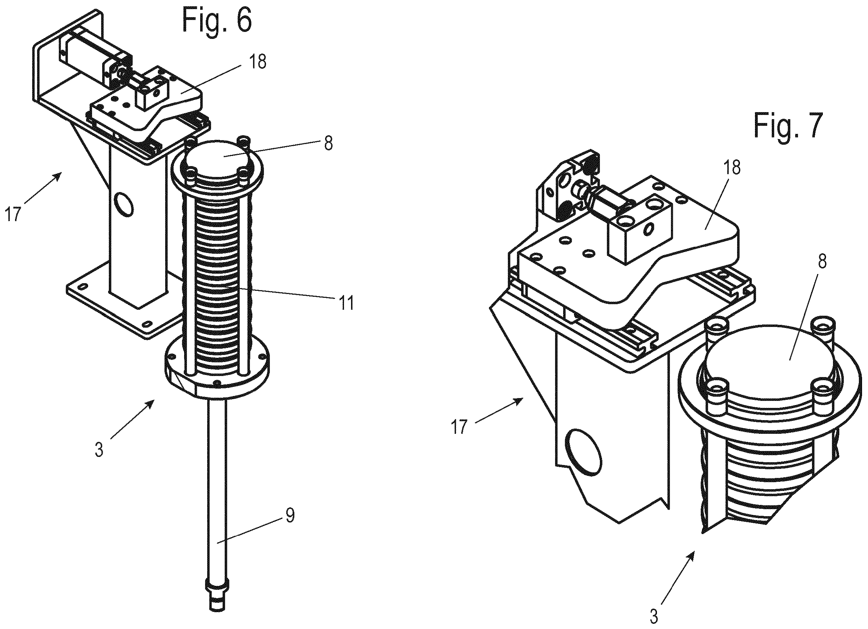

In der Fig. 6 ist eine Ausrichtstation 17 erkennbar, die eine prismaförmige in Richtung des Spenders 3 horizontal verfahrbare Aufnahme 18 aufweist, mittels der der Stützteller in eine achsgleiche Position zum Spender 3 bzw. zu den Polierscheiben 8 bringbar ist.

In der Fig. 7 ist der obere, die prismenförmige Aufnahme 18 aufweisende Bereich der Ausrichtstation 17 in vergrößerter Ansicht dargestellt.

Es ist zu erkennen, dass die Aufnahme 18 schlittengeführt verschiebbar ist, wobei die Verschiebung durch einen pneumatischen, hydraulischen oder elektromechanischen Antrieb erfolgen kann.

In Funktion liegt der Stützteller, dessen Grundfläche kreisrund ist, mit seinem Rand an dem gebildeten Prisma an, das insoweit eine Zentrierung für den Stützteller bildet.

Nach einer weiteren Ausführungsvariante, bei der das Polierwerkzeug am Roboterarm des Roboters 1 elektronisch auf Basis eines Absolutwertgebers ansteuerbar ist, kann auf den Einsatz einer solchen Ausrichtstation 17 verzichtet werden, da über die Winkelmessung Roboterarm des Roboters 1 exakt mittig über der Wechselstation positioniert werden kann.

Nach einer weiteren Ausführungsvariante, bei der das Polierwerkzeug am Roboterarm des Roboters 1 elektronisch inkrementell ansteuerbar ist, ist die Nutzung der Ausrichtstation 17 nur notwendig, wenn die Energieversorgung des Roboterarm des Roboters 1 unterbrochen wurde.

Erfindungsgemäß ist der Wechselvorrichtung 2 eine Abziehvorrichtung vorgeschaltet, mit der eine Polierscheibe 8 vom Stützteller 4 entfernbar ist.

Dazu ist die Abziehvorrichtung mit einer Klemmvorrichtung versehen, mit der nach einer Ausführungsvariante ein gegenüber dem Stützteller 4 vorstehender Randbereich der Polierscheibe 8 festklemmbar ist.

Die Klemmvorrichtung ist dabei koordinatenabhängig durch Laserdetektion, einen mechanischen Kontakt oder eine Lichtschranke, je nach Stellung des Stütztellers 4 zum Schließen betätigbar.

Unterhalb der Klemmvorrichtung kann dabei ein Auffangbehälter angeordnet sein, der der Aufnahme der vom Stützteller 4 gelösten Polierscheibe 8 dient.

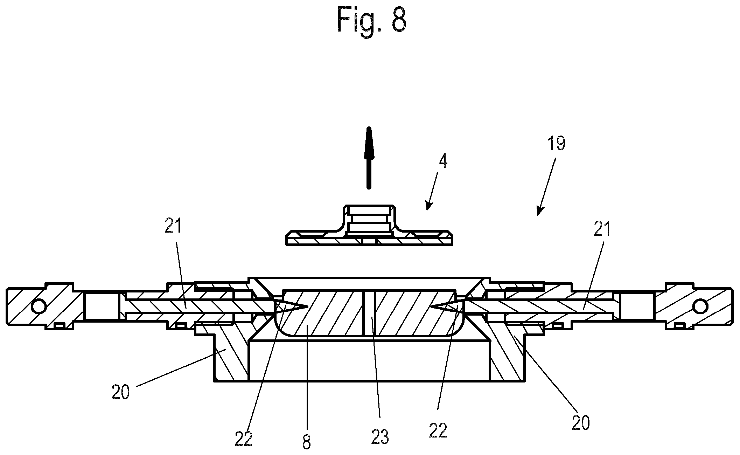

Nach einer bevorzugten Ausführungsvariante ist, wie in Figur 8 dargestellt, die Klemmvorrichtung der Abziehvorrichtung als Backenwerkzeug 19 ausgeführt.

Das Backenwerkzeug 19 weist, wie in Fig. 8 gezeigt, einen Grundkörper 20 mit einer bevorzugt kreisförmig ausgebildeten Aufnahmeöffnung zur Aufnahme der Polierscheibe 8 auf.

Zum Abziehen der Polierscheibe 8 von dem Stützteller 4 wird die am Stützteller 4 befestigte Polierscheibe 8 in die Öffnung des Backenwerkzeugs 19 eingedrückt.

Anschließend wird eine Kolbenspitze 22 wenigstens eines vorzugsweise pneumatisch verschiebbaren Kolbens seitlich in die Polierscheibe 8 eingedrückt und hält so die Polierscheibe 8 fest im Eingriff in dem Backenwerkzeug 19.

Denkbar ist auch die Anordnung mehrerer solcher Kolben 21 mit Kolbenspitzen 22 zur Fixierung der Polierscheibe 8.

Nachdem die Kolbenspitze 22 bzw. die Kolbenspitzen 22 in die Polierscheibe 8 seitlich eingedrückt ist bzw. sind, wird der Stützteller 4 von der Polierscheibe 8 senkrecht zur Fixierfläche des Stütztellers 4 weg bewegt und so die Polierscheibe 8 vom Stützteller 4 gelöst.

Anschließend werden die Kolben 21 in ihrer Ausgangsstellung zurückgefahren. Dabei bewegt sich die Kolbenspitze 22 bzw. die Kolbenspitzen 22 zurück aus dem Eingriff mit der Polierscheibe 8.

Die Polierscheibe 8 kann dann vorzugsweise nach unten in einen unterhalb des Backenwerkzeugs 19 positionierten Auffangbehälter entsorgt werden.

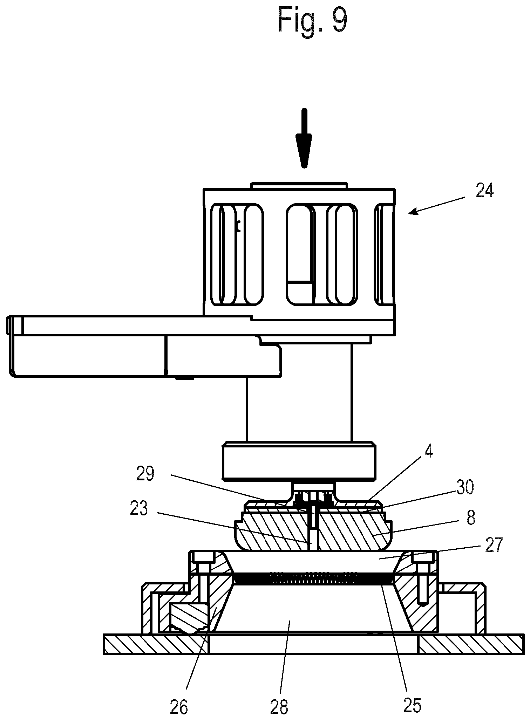

Gemäß einer weiteren Ausführungsvariante ist, wie in Fig. 9 dargestellt, die Klemmvorrichtung mit einer Zahnscheibe 25 versehen.

Wie in Fig. 9 gezeigt, weist das hier gezeigte Klemmvorrichtung einen als Zahnscheibenhalterung dienenden Grundkörper 26 mit kreisförmiger Öffnung auf, wobei oberhalb der Zahnscheibe 25 eine sich zu einem Polierwerkzeug 24 hin aufweitende Einlassöffnung 27 und eine sich unterhalb der Zahnscheibe 25 nach unten hin, d.h. von der Zahnscheibe 25 weg aufweitende Auslassöffnung 28 ausgebildet ist.

Auch hier wird zum Ablösen der Polierscheibe 8 die Polierscheibe 8 durch Verfahren des Polierwerkzeugs 24 in Richtung der Zahnscheibe 25 so weit verfahren, bis die Polierscheibe 8 durch die die Einlassöffnung 27 in die Zahnscheibe 25 gedrückt ist.

Der Durchmesser der Zahnscheibe 25 ist dabei geringfügig kleiner als der Durchmesser der Polierscheibe 8.

Anschließend wird das Polierwerkzeug 24 aus der Einlassöffnung 27 heraus zurück in ihre Ausgangsstellung, in Fig. 9 nach oben, verfahren. Dabei verhakt die Polierscheibe 8 sich in den Zähnen der Zahnscheibe 25, so dass bei weiterem nach oben Verfahren des Stütztellers 4 zusammen mit dem Polierwerkzeug 24 sich die Polierscheibe 8 von dem Stützteller 4 löst.

Die Polierscheibe 8 verbleibt dabei in den Zähnen der Zahnscheibe 25 verhakt hängen, bis die nächste Polierscheibe 8 durch die Einlassöffnung 27 und die Zahnscheibe 25 hindurchgedrückt wird und dabei die zuvor hängengebliebene Polierscheibe 8 sich aus dem Eingriff mit der Zahnscheibe 25 löst.

Unterhalb der Klemmvorrichtung kann auch bei diesem Ausführungsbeispiel ein Auffangbehälter positioniert sein, der die ge- bzw. verbrauchte Polierscheibe 8 auffängt.

Wie in den Fig. 8 und 9 des Weiteren gezeigt ist, weist die Polierscheibe 8 einen bevorzugt zentral und sich senkrecht zur Polierfläche der Polierscheibe 8 erstreckenden Kanal 23 auf.

Dieser Kanal 23 dient der Aufnahme einer Auftragsdüse 29, die zentral im Stützteller 4 angeordnet ist und die mit einem Poliermittelvorratsbehälter verbunden ist. Durch diese Poliermitteldüse 29 ist das Poliermittel in die Polierscheibe 8 eindosierbar.

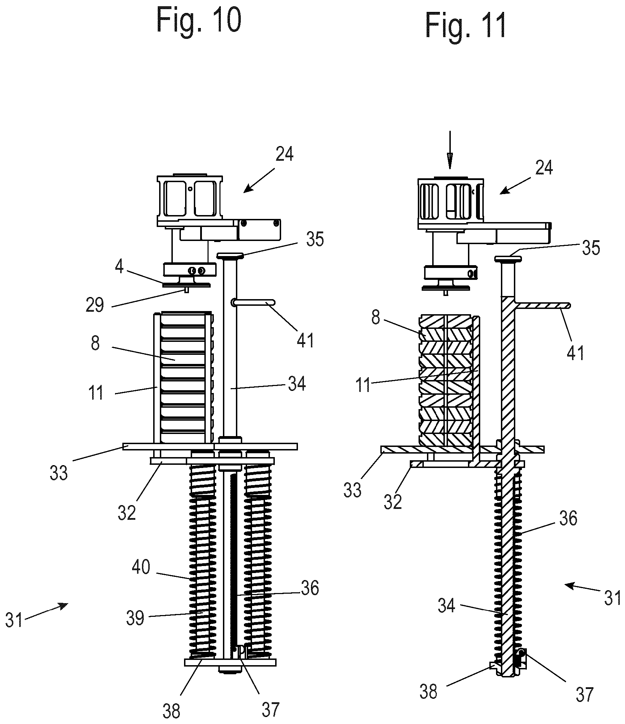

Weitere besondere Ausführungsvarianten eines Spenders 31, 42 sind in den Fig. 10 bis 13 dargestellt.

Bei der in den Fig. 10 und 11 dargestellten Ausführungsvariante weist der Spender 31 ähnlich der Ausführungsvariante von Fig. 3 mehrere Begrenzungsstangen 11 auf, die eine seitliche Fixierung für im gebildeten Innenraum gestapelte Polierscheiben 8 bilden.

Die Begrenzungsstangen 11 des Spenders 31 sind auf einem Boden 32 befestigt und durchtreten einen Zwischenboden 33, auf dem die Polierscheiben 8 aufstapelbar sind. Die Länge des aus dem Zwischenboden 33 nach oben vorstehenden Teils der Begrenzungsstangen 11 ist dabei an die Stapelhöhe der Polierscheiben 8 anpassbar ausgebildet.

Dazu ist der Boden 32, wie gut in Fig. 11 erkennbar ist, fest mit einer Positionierungsstange 34 verbunden ist.

Diese Positionierungsstange 34 weist an ihrem oberen, der Poliermaschine 24 nahen Ende eine Andruckfläche 35 auf, die bei Absenken des Polierwerkzeugs 24 mit dem an diesem angeordneten Stützteller 4 relativ zu den gestapelten Polierscheiben 8, in Fig. 11 nach unten, gedrückt wird, bis der Stützteller 4 zur Anlage mit der obersten der Polierscheiben 8 kommt und so die oberste Polierscheibe 8 mit dem Stützteller 4 haftend, vorzugsweise über eine Klettverbindung, verbunden wird.

Mit der Vertikalverschiebung der Positionierungsstange 34 einher geht ein Absenken der Begrenzungsstangen 11.

Die Polierscheiben 8 liegen dabei gestapelt nicht auf dem Boden 32 auf, an dem die Begrenzungsstangen 11 befestigt sind, sondern an einem oberhalb des Bodens 32 angeordneten Zwischenboden 33, durch den die Begrenzungsstangen 11 hindurchgeführt sind.

Dieser Zwischenboden 33 bleibt im Gegensatz zum Boden 32, an dem die Begrenzungsstangen 11 befestigt sind, relativ zur Ausgangsstellung des Stützteller 4 stets auf gleicher Höhe.

Die Positionierstange 34 ist zumindest im unteren Bereich unterhalb des Bodens 32 als Rastwelle ausgebildet, mit Rastzähnen 36.

In diese Rastzähne 36 greift eine an einem unteren Boden 38, der über Verbindungsstangen 39 mit dem Boden 32 verbunden ist, befestigte Sperrklinke 37 ein, mit der die Positionierstange 34 auf der jeweiligen Position, in der die zuvor vom Stützteller 4 aufgenommene Polierscheibe 8 aufgenommen wurde, verrastet wird.

Dies ermöglicht, dass der Abstand zwischen der Andruckfläche 35 der Positionierstange 34 und der Oberkante der jeweils obersten Polierscheibe 8 stets gleich bleibt, bis sämtliche Polierscheiben 8 aus dem Spender 3 entnommen sind.

Um den Spender 31 mit Polierscheiben 8 wieder aufzufüllen, kann die Sperrklinke 37 bei Verdrehen der Positionierstange 34, beispielsweise mithilfe eines an dieser senkrecht zu ihrer Längserstreckung angebrachten Betätigungshebel 41 die Verrastung freigegeben werden und durch Federkraft von Federn 40, die an den Verbindungsstangen 39 des Bodens 32 mit dem unteren Boden 38 angeordnet sind, zurück in seine Ausgangsstellung verschoben werden.

Dabei werden die Begrenzungsstangen 11 relativ zum Zwischenboden nach oben verfahren und bilden damit einen Käfig, der mit neuen Polierscheiben 8 aufgefüllt werden kann, bis der Stapel von Polierscheiben 8 wieder an die Oberkante der Begrenzungsstangen 11 reicht.

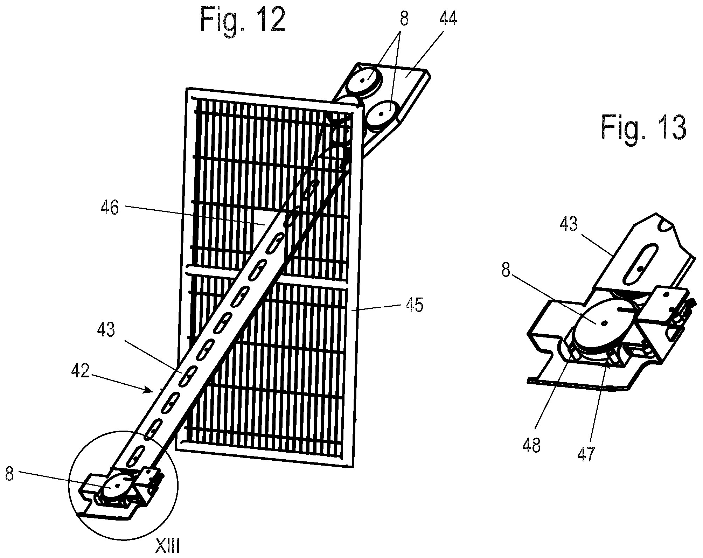

Bei der alternativen Ausführungsvariante, wie sie in den Fig. 12 und 13 gezeigt ist, weist der Spender 42 einen geneigt positionierten Magazinschacht 43 auf, in den in einem oberen Befüllungsbereich 44 Polierscheiben 8 eingelegt werden können.

Die Polierscheiben 8 rutschen dann entlang des Magazinschachtes 43 bis zu einer Entnahmestation 47.

An dieser in Figur 13 im Detail gezeigten Entnahmestation 47 sind Positionsstifte 48 zur exakten Positionierung der Polierscheiben 8 vorgesehen. An diese Entnahmestation 47 kann das Polierwerkzeug 24 mit dem an diesem angeordneten Stützteller 4 herangefahren werden und so eine jeweilige Polierscheibe 8 aufnehmen.

Wie in Fig. 12 des Weiteren gezeigt ist, reicht der Magazinschacht 43 durch eine Schutzwand 45 mit einer Öffnung 46 hindurch, wobei ein Rüstbereich 44 des Magazins 42 auf der der Schutzwand 45 gegenüberliegenden Seite positioniert ist als die Entnahmestation 47.

Um zu verhindern, dass mehr als eine Polierscheibe 8 übereinander an der Entnahmestation 47 vorliegt, ist im Bereich der Entnahmestation 47 vorzugsweise ein Überwachungselement, beispielsweise in Gestalt einer Lichtschranke vorgesehen.

### Bezugszeichenliste

- 1: Roboter
- 2: Wechselvorrichtung
- 3: Spender
- 4: Stützteller
- 5: Trennwand
- 6: Arbeitstisch
- 7: Bedienperson
- 8: Polierscheibe
- 9: Schiebeeinrichtung
- 10: Anschlag
- 11: Begrenzungsstange
- 12: Dosiervorrichtung
- 13: Kartusche
- 14: Auftragsdüse
- 15: Rüstbereich
- 16: Arbeitsbereich
- 17: Ausrichtstation
- 18: Aufnahme
- 19: Backenwerkzeug
- 20: Grundkörper
- 21: Kolben
- 22: Kolbenspitze
- 23: Kanal
- 24: Polierwerkzeug
- 25: Zahnscheibe
- 26: Grundkörper
- 27: Einlassöffnung
- 28: Auslassöffnung
- 29: Poliermitteldüse
- 30: Klettbelag
- 31: Spender
- 32: Boden
- 33: Zwischenboden
- 34: Positionierstange
- 35: Andruckfläche
- 36: Rastzähne
- 37: Sperrklinke
- 38: Boden
- 39: Verbindungsstange
- 40: Feder
- 41: Betätigungshebel
- 42: Spender
- 43: Magazinschacht
- 44: Rüstbereich
- 45: Schutzwand
- 46: Öffnung
- 47: Entnahmestation
- 48: Positionsstift

## Patentansprüche

1. Vorrichtung zum Auswechseln einer in Funktion mit einem Poliermittel belegten Polierscheibe (8) aus einem sehr weichen Material, insbesondere aus einem Schaumstoff, Schaumgummi, Filz oder Lammfell, die an einen Stützteller (4) eines an einem Roboter (1) gehaltenen Polierwerkzeugs mittels Verbindungsmitteln befestigt ist, mit eine Wechselvorrichtung (2) mit mindestens einem Spender (31), in dem ein Stapel von Polierscheiben (8) angeordnet ist, wobei der Spender (31) eine Entnahmeöffnung aufweist, deren lichte Weite größer als das zugeordnete Abmaß des Stütztellers (4) ist und wobei auf der der Entnahmeöffnung abgewandten Seite eine axial bewegbare Schiebeeinrichtung (9) vorgesehen ist, auf der der Stapel aufliegt, wobei der Spender (3) auf einem Boden (32) befestigte Begrenzungsstangen (11) und einen von den Begrenzungsstangen (11) durchtretenen Zwischenboden (33) aufweist, auf dem die Polierscheiben (8) aufstapelbar sind, **dadurch gekennzeichnet, dass** die Länge der einen Aufnahmekäfig für die Polierscheiben (8) bildenden Begrenzungsstangen (11) an die Stapelhöhe der Polierscheiben (8) anpassbar ausgebildet ist, wobei der Wechselvorrichtung (2) eine Abziehvorrichtung vorgeschaltet ist, mit der eine Polierscheibe (8) vom Stützteller (4) entfernbar ist, wobei die Abziehvorrichtung mit einer Klemmvorrichtung versehen ist, mit der die Polierscheibe (8) seitlich festklemmbar ist, wobei die Klemmvorrichtung eine Zahnscheibe (25) mit einem als Zahnscheibenhalterung dienenden Grundkörper (26) mit kreisförmiger Öffnung aufweist, wobei der Grundkörper (26) eine sich von der Zahnscheibe (25) weg aufweitende Einlassöffnung (27) aufweist, in die der Stützteller (4) eines Polierwerkzeugs mit daran haftender Polierscheibe (8) einführbar ist, und eine sich von der Zahnscheibe (25) weg aufweitende Auslassöffnung (28), durch die eine vom Stützteller (4) gelöste Polierscheibe (8) aus der Klemmvorrichtung entnehmbar ist.

2. Vorrichtung nach Anspruch 1, **dadurch gekennzeichnet, dass** die lichte Weite der Entnahmeöffnung des Spenders (3) kleiner ist als das zugeordnete Abmaß der Polierscheibe (8).

3. Vorrichtung nach Anspruch 1 oder 2, **dadurch gekennzeichnet, dass** die Klemmvorrichtung koordinatenabhängig durch Laserdetektion, einen mechanischen Kontakt oder eine Lichtschranke, je nach Stellung des Stütztellers (4) zum Schließen betätigbar ist.

4. Vorrichtung nach einem der vorhergehenden Ansprüche, **dadurch gekennzeichnet, dass** unterhalb der Klemmvorrichtung ein Auffangbehälter angeordnet ist, zur Aufnahme der vom Stützteller (4) gelösten Polierscheibe (8).

5. Vorrichtung nach einem der vorhergehenden Ansprüche, **dadurch gekennzeichnet, dass** der Wechselvorrichtung (2) vorgeschaltet eine Ausrichtstation (17) zur lagegenauen Positionierung des Stütztellers (4) vorgesehen ist, wobei die Ausrichtstation (17) eine prismenförmige Aufnahme (18) aufweist.

6. Vorrichtung nach einem der vorhergehenden Ansprüche, **dadurch gekennzeichnet, dass** der Wechselvorrichtung (2) nachgeschaltet eine Dosiervorrichtung (12) angeordnet ist, mit einem Vorratsbehälter an Poliermittel und einer damit verbundenen Auftragsdüse (14).

7. Vorrichtung nach einem der vorhergehenden Ansprüche, **dadurch gekennzeichnet, dass** mehrere Spender (3) auf einem Tisch positioniert sind, der taktweise verfahrbar ist.

8. Vorrichtung nach Anspruch 7, **dadurch gekennzeichnet, dass** der Tisch als Rundtisch oder Lineartisch ausgebildet ist.

9. Vorrichtung nach Anspruch 7 oder 8, **dadurch gekennzeichnet, dass** die Spender (3) in gleichem Abstand zueinander angeordnet sind.

10. Vorrichtung nach einem der vorhergehenden Ansprüche, **dadurch gekennzeichnet, dass** die Wechselvorrichtung (2) eingehaust ist.

11. Vorrichtung nach Anspruch 10, **dadurch gekennzeichnet, dass** die eingehauste Wechselvorrichtung (2) eine Entnahmeöffnung zum Wechseln der Spender (3) aufweist.

12. Vorrichtung nach einem der vorhergehenden Ansprüche, **dadurch gekennzeichnet, dass** die Wechselvorrichtung (2), und/oder die Dosiereinrichtung (12), und/oder der Roboter (1), und/oder die Abziehvorrichtung und/oder die Ausrichtstation (17) an einem Rechner angeschlossen sind.

13. Vorrichtung nach einem der vorhergehenden Ansprüche 5 bis 12, **dadurch gekennzeichnet, dass** zur Steuerung des Roboterarms sowie der Wechselvorrichtung (2), der Abziehvorrichtung, der Dosiervorrichtung sowie der Ausrichtstation (17) Sensoren vorgesehen sind.

14. Vorrichtung nach einem der vorhergehenden Ansprüche, **dadurch gekennzeichnet, dass** der Boden (32) fest mit einer Positionierungsstange (34) verbunden ist, die bei Absenken des Polierwerkzeugs (24) mit dem an diesem angeordneten Stützteller (4) relativ zu den gestapelten Polierscheiben (8) verfahrbar ist, bis der Stützteller (4) zur Anlage mit der obersten der Polierscheiben (8) kommt und in dieser Position verrastbar ist.

15. Vorrichtung zum Auswechseln einer in Funktion mit einem Poliermittel belegten Polierscheibe (8) aus einem sehr weichen Material, insbesondere aus einem Schaumstoff, Schaumgummi, Filz oder Lammfell, die an einen Stützteller (4) eines an einem Roboter (1) gehaltenen Polierwerkzeugs mittels Verbindungsmitteln befestigt ist, **gekennzeichnet durch** eine Wechselvorrichtung (2) mit mindestens einem Spender (42), wobei der Spender (42) einen geneigt positionierten Magazinschacht (43) aufweist, mit einem oberen Befüllungsbereich (44) zur Auflage wenigstens einer Polierscheibe (8), die entlang des Magazinschachtes (43) in eine Entnahmestation (47) an einem unteren Ende des Magazinschachtes (43) bringbar ist, an die der Stützteller (4) zur Anbringung der Polierscheibe (8) an den Stützteller (4) heranfahrbar ist.

16. Vorrichtung nach Anspruch 15, **dadurch gekennzeichnet, dass** die Entnahmestation (47) Positionsstifte (48) zur exakten Positionierung der Polierscheibe (8) aufweist.

## Claims

1. Device for replacing a polishing disc (8) made of a very soft material, in particular foam, foam rubber, felt or lambskin, which in function is coated with a polishing agent and is attached to a support plate (4) of a polishing tool held by a robot (1) by means of connecting elements, with a exchanging device (2) with at least one dispenser (31) in which a stack of polishing discs (8) is arranged, wherein the dispenser (31) has a removal opening whose clear width is greater than the associated dimension of the support plate (4) and wherein an axially movable sliding device (9) is provided on the side facing away from the removal opening, on which the stack rests, wherein the dispenser (3) has limiting rods (11) fixed to a floor (32) and an intermediate floor (33) passing through the limiting rods (11), on which the polishing discs (8) can be stacked, **characterized in that** the length of the limiting rods (11) forming a receiving cage for the polishing discs (8) is adaptable to the stack height of the polishing discs (8), wherein the exchanging device (2) is preceded by a removal device with which a polishing disc (8) can be removed from the support plate (4), wherein the removal device is provided with a clamping device with which the polishing disc (8) can be clamped laterally, wherein the clamping device has a toothed pulley (25) with a main body (26) serving as a toothed disc holder with a circular opening, wherein the main body (26) has an inlet opening (27) widening away from the toothed pulley (25), into which the support plate (4) of a polishing tool with the polishing disc (8) adhering thereto can be inserted, and an outlet opening (28) widening away from the toothed pulley (25), through which a polishing disc (8) released from the support plate (4) can be removed from the clamping device.

2. Device according to claim 1, **characterized in that** the clear width of the removal opening of the dispenser (3) is smaller than the corresponding dimension of the polishing disc (8).

3. Device according to claim 1 or 2, **characterized in that** the clamping device can be actuated for closing in a coordinate-dependent manner by laser detection, a mechanical contact or a light barrier, depending on the position of the support plate (4).

4. Device according to one of the preceding claims, **characterized in that** a collection container is arranged below the clamping device to receive the polishing disc (8) released from the support plate (4).

5. Device according to one of the preceding claims, **characterized in that** an alignment station (17) is provided upstream of the exchanging device (2) for the precise positioning of the support plate (4), wherein the alignment station (17) has a prism-shaped receptacle (18).

6. Device according to one of the preceding claims, **characterized in that** a dosing device (12) is arranged downstream of the exchanging device (2), with a storage container for polishing agent and an application nozzle (14) connected thereto.

7. Device according to one of the preceding claims, **characterized in that** several dispensers (3) are positioned on a table that can be moved in cycles.

8. Device according to claim 7, **characterized in that** the table is designed as a rotary table or linear table.

9. Device according to claim 7 or 8, **characterized in that** the dispensers (3) are arranged at equal distances from each other.

10. Device according to one of the preceding claims, **characterized in that** the exchanging device (2) is enclosed.

11. Device according to claim 10, **characterized in that** the enclosed exchanging device (2) has a removal opening for changing the dispensers (3).

12. Device according to one of the preceding claims, **characterized in that** the exchanging device (2) and/or the dosing device (12) and/or the robot (1) and/or the removal device and/or the alignment station (17) are connected to a computer.

13. Device according to one of the preceding claims 5 to 12, **characterized in that** sensors are provided for controlling the robot arm and the exchanging device (2), the removal device, the dosing device, and the alignment station (17).

14. Device according to one of the preceding claims, **characterized in that** the floor (32) is firmly connected to a positioning rod (34) which, when the polishing tool (24) is lowered, can be moved relative to the stacked polishing discs (8) together with the support plate (4) arranged thereon until the support plate (4) comes into contact with the uppermost of the polishing discs (8) and can be locked in this position.

15. Device for replacing a polishing disc (8) made of a very soft material, in particular foam, foam rubber, felt or lambskin, which in function is coated with a polishing agent and is attached to a support plate (4) of a polishing tool held on a robot (1) by means of connecting means, **characterized by** a exchanging device (2) with at least one dispenser (42), wherein the dispenser (42) has an inclined magazine shaft (43), with an upper set-up area (44) for supporting at least one polishing disc (8), which can be moved along the magazine shaft (43) into a removal station (47) at a lower end of the magazine shaft (43), to which the support plate (4) can be moved for attaching the polishing disc (8) to the support plate (4).

16. Device according to claim 15, **characterized in that** the removal station (47) has positioning pins (48) for the exact positioning of the polishing disc (8).

## Revendications

1. Dispositif pour remplacer un disque de polissage (8) recouvert d'un produit de polissage en fonctionnement et fait d'un matériau très souple, en particulier de mousse, de caoutchouc-mousse, de feutre ou de laine d'agneau, fixé au moyen de moyens de fixation sur un disque de support (4) d'un outil de polissage retenu sur un robot (1), avec un dispositif d'échange (2) comportant au moins un distributeur (31) dans lequel est disposée une pile de disques de polissage (8), dans lequel le distributeur (31) comporte une ouverture de prélèvement dont la largeur libre est plus grande que la dimension associée du disque de support (4) et dans lequel est prévu, sur le côté tourné à l'opposé de l'ouverture de prélèvement, une installation de translation (9) déplaçable dans le sens axial sur laquelle repose la pile, dans lequel le distributeur (3) comporte des baguettes de délimitation (11) fixées sur un fond (32) et un fond intermédiaire (33) traversé par les baguettes de délimitation (11) et sur lequel les disques de polissage (8) peuvent être empilés, **caractérisé en ce que** la longueur des baguettes de délimitation (11) formant une cage de réception pour les disques de polissage (8) peut être adaptée à la hauteur d'empilement des disques de polissage (8), le dispositif d'échange (2) étant précédé d'un dispositif de retrait avec lequel un disque de polissage (8) peut être retiré du disque de support (4), le dispositif de retrait étant muni d'un dispositif de serrage avec lequel le disque de polissage (8) peut être fixé par serrage latéral, le dispositif de serrage comportant un disque denté (25) avec un corps de base (26) muni d'une ouverture circulaire servant de monture de disque denté, lequel corps de base (26) comporte une ouverture d'introduction (27) qui s'élargit en s'éloignant du disque denté (25), dans laquelle le disque de support (4) d'un outil de polissage peut être introduit avec un disque de polissage (8) adhérant dessus, et une ouverture de sortie (28) qui s'élargit en s'éloignant du disque denté (25), à travers laquelle un disque de polissage (8) détaché du disque de support (4) peut être retiré du dispositif de serrage.

2. Dispositif selon la revendication 1, **caractérisé en ce que** la largeur libre de l'ouverture de prélèvement du distributeur (3) est plus petite que la dimension associée du disque de polissage (8).

3. Dispositif selon la revendication 1 ou 2, **caractérisé en ce que** le dispositif de serrage peut être actionné pour se fermer en fonction de coordonnées, par détection par laser, par un contact mécanique ou par un barrage photoélectrique, selon la position du disque de support (4).

4. Dispositif selon l'une des revendications précédentes, **caractérisé en ce qu'**un bac collecteur est disposé en dessous du dispositif de serrage pour recueillir le disque de polissage (8) détaché du disque de support (4).

5. Dispositif selon l'une des revendications précédentes, **caractérisé en ce qu'**est prévu en amont du dispositif d'échange (2) un poste d'orientation (17) pour le positionnement précis du disque de support (4), lequel poste d'orientation (17) présente un logement (18) en forme de prisme.

6. Dispositif selon l'une des revendications précédentes, **caractérisé en ce qu'**est disposé en aval du dispositif d'échange (2) un dispositif doseur (12) avec un réservoir de produit de polissage et une buse d'application (14) reliée à celui-ci.

7. Dispositif selon l'une des revendications précédentes, **caractérisé en ce que** plusieurs distributeurs (3) sont positionnés sur un plateau qui peut être déplacé de manière cadencée.

8. Dispositif selon la revendication 7, **caractérisé en ce que** le plateau est conformé comme un plateau rond ou un plateau linéaire.

9. Dispositif selon la revendication 7 ou 8, **caractérisé en ce que** les distributeurs (3) sont disposés à intervalles réguliers les uns par rapport aux autres.

10. Dispositif selon l'une des revendications précédentes, **caractérisé en ce que** le dispositif d'échange (2) est capoté.

11. Dispositif selon la revendication 10, **caractérisé en ce que** le dispositif d'échange (2) capoté comporte une ouverture de prélèvement pour l'échange des distributeurs (3).

12. Dispositif selon l'une des revendications précédentes, **caractérisé en ce que** le dispositif d'échange (2) et/ou le dispositif doseur (12) et/ou le robot (1) et/ou le dispositif de retrait et/ou le poste d'orientation (17) sont connectés à un calculateur.

13. Dispositif selon l'une des revendications 5 à 12, **caractérisé en ce que** des capteurs sont prévus pour la commande du bras de robot ainsi que du dispositif d'échange (2), du dispositif de retrait, du dispositif doseur et du poste d'orientation (17).

14. Dispositif selon l'une des revendications précédentes, **caractérisé en ce que** le fond (32) est fixé à une tige de positionnement (34) qui peut être déplacée avec l'outil de polissage (24), lors de son abaissement avec le disque de support (4) disposé dessus, par rapport aux disques de polissage (8) empilés, jusqu'à ce que le disque de support (4) vienne reposer sur le disque de polissage (8) du dessus de la pile, et peut être enclenché dans cette position.

15. Dispositif pour remplacer un disque de polissage (8) recouvert d'un produit de polissage en fonctionnement et fait d'un matériau très souple, en particulier de mousse, de caoutchouc-mousse, de feutre ou de laine d'agneau, fixé au moyen de moyens de fixation à un disque de support (4) d'un outil de polissage retenu sur un robot (1), **caractérisé en ce qu'**il comporte un dispositif d'échange (2) avec au moins un distributeur (42), lequel distributeur (42) comporte une colonne de magasin (43) positionnée à l'oblique avec une zone de remplissage supérieure (44) pour l'appui d'au moins un disque de polissage (8), qui peut être amené le long de la colonne de magasin (43) dans un poste de prélèvement (47) à une extrémité inférieure de la colonne de magasin (43), à laquelle le disque de support (4) peut être avancé pour appliquer le disque de polissage (8) sur le disque de support (4).

16. Dispositif selon la revendication 15, **caractérisé en ce que** le poste de prélèvement (47) comporte des goujons de position (48) pour le positionnement exact du disque de polissage (8).
